(19) Europäisches Patentamt

European Patent Office

Office européen des brevets

(11) Veröffentlichungsnummer: **0 454 252 B1**

(12) **EUROPÄISCHE PATENTSCHRIFT**

(45) Veröffentlichungstag der Patentschrift: **12.07.95**

(21) Anmeldenummer: **91200957.8**

(22) Anmeldetag: **22.04.91**

(51) Int. Cl.⁶: **A23L 1/211**

Die Akte enthält technische Angaben, die nach dem Eingang der Anmeldung eingereicht wurden und die nicht in dieser Patentschrift enthalten sind.

(54) Verfahren zur Herstellung eines allergenfreien Sojamehlpräparates mit hohem Nährwert.

(30) Priorität: **24.04.90 NL 9000975**

(43) Veröffentlichungstag der Anmeldung:
**30.10.91 Patentblatt 91/44**

(45) Bekanntmachung des Hinweises auf die Patenterteilung:
**12.07.95 Patentblatt 95/28**

(84) Benannte Vertragsstaaten:
**AT BE CH DE DK ES FR GB GR IT LI LU NL SE**

(56) Entgegenhaltungen:
**EP-A- 0 326 622
FR-A- 2 196 755
FR-A- 2 216 932
GB-A- 1 585 456
US-A- 4 054 679**

**JOURNAL OF THE AMERICAN OIL CHEMISTS' SOCIETY. Bd. 48, Nr. 12, 1971, CHAMPAIG-NUS Seiten 815 - 819; G.MUSTAKAS: 'Full-fat and defatted soy flours for human nutrition'**

**JOURNAL OF THE AMERICAN OIL CHEMISTS' SOCIETY. Bd. 48, Nr. 9, 1971, CHAMPAIGNUS Seiten 481 - 483; R.KELLER: 'Soy flour and grits for use in food products'**

(73) Patentinhaber: **Schouten Group N.V.
Burgstraat 12
NL-4283 GG Giessen (NL)**

(72) Erfinder: **Veth, Paul Sebastiaan
Kamperfoeliestraat 57
NL-5271 JE St. Michielsgestel (NL)**
Erfinder: **Hak, Barend Willem
Groot Zuideveld 10
NL-4251 CC Dussen (NL)**

(74) Vertreter: **Siemens, Andreas Meinhard Ernest, Dipl.-Ing.
SIEMENS & CIE.
Roskam 8
NL-4813 GZ Breda (NL)**

**Beschreibung**

Die vorliegende Erfindung bezieht sich auf ein Verfahren zur Behandlung eines Produktes aus Sojaschrot als Nährmittel für Mensch und Tier.

Die Bohnen enthalten etwa 30-45 Gew.-% Proteine, etwa 18-20 Gew.-% Fette, und etwa 15-20 Gew.-% Kohlenhydrate.

Nach der Extrahierung von Sojaöl mit Hexan aus den Bohnen bleibt Sojaschrot übrig, welcher kurz erhitzt (getoasted) wird und darauf fein zu einem Pulver von etwa 200 mesh, das noch 10-15 Gew.-% Feuchtigkeit enthält, gemahlen wird.

Nach der Extrahierung erhält man also ein eiweissreiches Produkt.

In K.S. Markley, "Soybeans and Soybean Products", (New York, 1950), wurde diese Verarbeitung beschrieben und wurden Angaben bezüglich des Nährwertes dargelegt.

Der Nährwert des Produktes wird jedoch häufig nachteilig durch einen Trypsin-Inhibitor beeinflusst, welcher die proteinabbauende Funktion der Enzyme, die für eine gute Verdauung erforderlich sind, bekämpft.

Um diesen Inhibitor zu vernichten, wird eine Wärmebehandlung angewandt, doch dabei kann die Aminosäure Lysin abgebaut werden, die für die Nahrung ein wesentlicher Bestandteil ist.

Im U.S.Pat. 4,054,679 wird eine Behandlung von Sojaschrot mit Dampf und kurzzeitigem Erhitzen beschrieben, welche dazu dienen soll, Bakterien zu vernichten und den Geschmack zu verbessern.

Die Löslichkeit der Kohlenhydrate wird erhöht.

An Allergene war dabei nicht gedacht.

Immerhin war nicht erkannt, dass bei dieser Behandlung, wenn man von Sojaschrot ausgeht, ein Produkt erhalten wird, das antigene Bestandteile enthält. Dies ergibt einen Nachteil für die Anwendung, weil die verursachten Allergien sowohl für Menschen wie für Tiere sehr gefährlich sind.

Die Sojaproteine, die bei Säugetieren und Menschen allergische Symptome verursachen können, gehören überwiegend zu den sogenannten 7S- und 11S-Proteinfraktionen.

Dazu gehören unter anderem Glycin und $\beta$-Conglycinin.

Es ist bekannt, dass Proteine durch Enzyme, wie Proteasen, gespalten werden können, doch diese Bearbeitung kann nur bei sehr hohem Feuchtigkeitsgehalt ausgeführt werden, und sie ist sehr kostspielig.

Ausserdem wird der Nährwert häufig verringert.

Dazu treten noch einige andere Proteine auf, die gleichfalls eine antigene Wirksamkeit besitzen können.

Im Blutserum von Säugetieren und Menschen werden Antikörper (Immunoglobuline IgG und IgE) gebildet gegen diese Proteine.

Diese können allergene Symptome veranlassen, und bei Mensch und Tier schwere Verdauungsstörungen verursachen, begleitet von einer erhöhten Passage durch den Magen und den Darmkanal, was zu schwerem Durchfall (Diarrhoee), Verlust an Körpergewicht, Wachstumverzögerung und Hautentzündungen führt.

Andere antinutritionelle Faktoren in Sojaprodukten sind Haemagglutinine, Goïtrogene, Vitamin-Inhibitoren, Saponine, Oestrogene und der Kunitz-Trypsin-Inhibitor.

Um nun doch Sojamehl und dessen Produkte für die Nahrung von Mensch und Tier verwenden zu können, wurde nach einem Verfahren gesucht, Schrot und Mehl von extrahierter Soja solchermassen zu behandeln, dass ein optimaler Nährwert an essentiellen gut verdaulichen Proteinen erhalten bleibt, und dass die antigenen proteine vollkommen unschädlich gemacht werden.

Das gefundene Verfahren zur Zubereitung von Sojamehl, welches als Bestandteil von Nahrungsmitteln besser als das bisherige geeignet ist, besteht, nach der bekannten Extraktion und Röstung von Sojaschrot, zwecks Beseitigung allergener Bestandteile aus folgenden Verfahrensstufen:

a) Konditionierung während etwa 15 Minuten durch zusatz von 2-3 Gew.-% konzentrierter Natron- oder Kalilauge, bis zu einem Feuchtigkeitsgehalt von etwa 20-25 Gew.-% und einem pH-Wert von mehr als 7,

b) Hydrolyse unter Druck von 20-40 bar, bei einer Temperatur von 149-178°C, unter gleichzeitiger schneller Bewegung der Masse während 1-4 Minuten,

c) Expansion des Produktes bis auf Normaldruck,

d) Zusatz von Säure bis zu einem schwach sauren pH-Wert,

e) Vermahlen des erhaltenen Produktes.

Die hydrothermische Behandlung wird vorzugsweise in einem Schneckenförderer mit Expansionsmundstück ausgeführt.

Es hat sich gezeigt, dass durch die hydrothermische Behandlung unter Druck gemäss der vorliegenden Erfindung die antigenen Verbindungen vollständig abgebaut werden und umgesetzt werden zu unschädlichen Verbindungen, während der Nährwert des Produktes hoch bleibt.

Vorzugweise wird die hydrothermische Behandlung nach Konditionierung (15 min) mit einem Feuchtigkeitsgehalt von 20 bis 35 Gew.-% durchgeführt unter einem Druck von 20-40 bar und bei einer Temperatur von 149-178°C, nach Zusatz von 2 bis 3 Gew.-% einer Base (Natronlauge oder Kalilauge), wobei die Verweilzeit 1-4 Minuten, mit kontinuierlich fortgesetzter Bewegung betragen soll.

Das produkt wird zuerst konditioniert während etwa 15 min durch Zusatz der Base bis zu einem alkalischen pH-Wert, und darauf bei einem Feuchtigkeitsgehalt von etwa 25 Gew.-% einem Druck von etwa 30 bar und einer temperatur von etwa 150°C unterworfen, sodass eine hydrolysierende Wirkung auftritt, wobei die Wirkungszeit 1-4 min beträgt bei kontinuierlich schneller Bewegung, in einem Schneckenförderer mit Expansionsmundstück, und die Expansion beim Austritt aus dem Mundstück erfolgt, wobei ein schwammartiges Produkt erhalten wird, das gemahlen werden kann.

Es kann auch eine Schneckenpresse mit einer oder mehreren Schrauben und mit einem spaltförmigen Mundstück verwendet werden für das erfindungsgemässe Verfahren.

Nach der Behandlung wird angesäuert auf einen schwach sauren pH-Wert.

Die Erfindung umfasst auch ein fertiges Nahrungsprodukt, welches durch Anwendung des beschriebenen Verfahrens erhalten wird.

Der Nährwert des erhaltenen Produkts kann durch quantitative Analyse der Bestandteile und durch den Protein-Dispersions-Index (P.D.I.) festgelegt werden und mit den angewandten Parametern korreliert werden.

Der Protein-Dispersions-Index wird ermittelt wie beschrieben in A.O.C.S.Tentative Method Ba 10-65 (1967), indem das Mehl in destilliertem Wasser dispergiert wird und zentrifugiert wird, wonach der Stickstoffgehalt nach der Kjeldahl-Methode als Ammoniak bestimmt wird.

Der Protein-Dispersions-Index ist das prozentuale Verhältnis des Stickstoffs im dispergierten Produkt bezogen auf den Stickstoff im Ausgangsprodukt.

$$P.D.I. \left[\%\right] = \frac{N_{dispergiert}}{N_{Ausgangsprodukt}} \cdot 100$$

Der Gesamtgehalt an Proteinen kann quantitativ ermittelt werden durch HPLC-Chromatographie, mit einer Kolonne, die gefüllt ist mit Teilchen aus nicht-porösen Harzen, wie beschrieben von G.P.Rozing und H.Goetz in "Fast Separations of Biological Macromolecules on Non-porous Microparticulate Support Columns", Vortrag auf dem 8. internationalen Symposium über Proteine, Peptide und Polynukleotide (1988), sowie in Hewlett-Packard Application Notes Nr.88-5 und Nr. 88-6 (1988).

Die qualitative und quantitative Analyse mit deutlicher Indikation allergener Proteine ("Immunoblotting") wird nach der sogenannten ELISA-Methode ("Enzyme linked immunosorbent assay") ausgeführt, wie beschrieben in "Journal Allergy Clinic Immunology", 82,(1988), Seite 251-255.

Bei dieser Bestimmung werden Antikörper verwendet, die isoliert und gereinigt wurden aus Serum von Kälbern, die mit leicht geröstetem Sojamehl gefüttert wurden.

Die Proteine wurden mittels Zonen-Elektrophorese getrennt.

Die Zonen-Elektrophorese wird ermöglicht durch die Unterschiede in der Migrations-geschwindigkeit der gelösten Proteine in einem elektrischen Feld. Die proteine werden erst extrahiert, mit Natriumdodecylsulfat getrennt auf einem Elektrophorese-Gel und von der Gel-Matrix auf die Oberfläche einer Nitrozellulosemembrane gebracht mittels eines elektrischen Feldes, das senkrecht zu der Oberfläche der membran gerichtet ist.

Darauf wird die Nitrozellulosemembrane inkubiert mit verdünnter Kälberserumlösung, die von Kälbern stammt, welche mit leicht geröstetem Sojamehl gefüttert wurden.

Die Kälber sind auf diese Weise oral immunisiert und sie bilden Antikörper gegen alle antigenen Komponenten (Proteine) in dem leicht gerösteten Sojamehl. Die Antikörper werden auf sogenannten Mikrotiterplatten ausgestrichen, worauf Extrakte der zu prüfenden Sojaprodukte darauf inkubiert werden. Die Antikörper erkennen und binden die antigenen Proteine in den Extrakten.

Danach werden die gebundenen antigenen Komponenten immunochemisch quantifiziert durch Inkubation mit demselben Antikörper wie dem, womit die Platten bestrichen sind, aber welcher nun mit einem Peroxydase-Molekül konjugiert ist. Die Peroxidase wird angewandt um eine Farbreaktion zu katalysieren, und die Intensität der Färbung ist ein direktes Mass für die Menge der gebundenen antigenen Proteine.

Mit Hilfe einer Eichkurve, welche von leicht geröstetem Sojamehl hergestellt wurde, kann die Menge an antigenen Proteinen in den Proben und Vergleichsmustern ermittelt werden.

3

Es hat sich gezeigt, dass man mit dieser Methode eine gute Bewertung des Produktes ermöglichen kann (Siehe Abbildung und Tabelle).

Wenn man ausgeht von einem Produkt mit etwa 20% Feuchtigkeit, kann ein Gehalt von > 50% Proteinen und einem Dispersions-Index von > 50 erreicht werden bei einem Druck von 30-40 bar und einer Temperatur von etwa 150°C, wobei allergene Eigenschaften vollkommen verschwunden sind, und das Produkt nach der Expansion gut vermahlbar und in Nahrungspräparaten zu verarbeiten ist.

Es wurde gefunden, dass bei kurzer Behandlungsdauer und verhältnismässig niedrigem Feuchtigkeitsgehalt die Qualität des Produktes erheblich steigt, wenn der Druck erhöht wird, d.h. dass Drucksteigerung eine schnellere Verarbeitung ermöglicht.

## Tabelle

### Vergleich von Resultaten:

| Probe-Nr.: | Konditionierung: Feuchtigk. (%) | pH: | Zeit: (min) | Druckbehandlung: Temp. (°C) | Druck: Absol. (bar) | Zeit: (min) | Säurezugabe: bis pH: | Allergengehalt: Farbskala nach Gel-Elektrophorese *) | Proteine: (Gew.-% der Trockensubstanz): | Protein-Dispergier-barkeits Index (%): (P.D.I.): |
|---|---|---|---|---|---|---|---|---|---|---|
| 1 | Unbehandelt | | | --- | --- | -- | ----- | 5 | 54.2 | 20 |
| 2 | 20.8 | 7.7 | 15 | 178 | 31 | 1-2 | 4.69 | 2 | 39.2 | 56 |
| 3 | 21.5 | 9.2 | 15 | 176 | 35 | 1-2 | 6.16 | 2 | 40.1 | 49 |
| 4 | 29.4 | 10.6 | 15 | --- | --- | --- | ----- | 4 | 55.4 | 30 |
| 5 | 23.6 | 10.6 | 15 | 162 | 35 | 1-2 | 5.54 | 2 | ---- | 41 |
| 6 | 31.3 | 11.7 | 15 | --- | -- | 1-2 | ----- | 2 | ---- | ----- |
| 7 | 25.0 | 11.7 | 15 | 150 | 22 | 2 | 8.23 | 1 | 56.5 | 50 |
| 8 | 23.7 | 11.7 | 15 | 153 | 32 | 2 | 5.63 | 1 | 55.5 | 50 |
| 9 | 22.6 | 11.0 | 15 | 167 | 35 | 2 | 5.21 | 1 | 50.1 | 52 |
| 10 | 20.3 | 10.8 | 15 | 171 | 40 | 2 | 5.52 | 1 | 51.7 | 51 |
| 11 | 28.8 | 10.7 | 15 | 149 | 32 | 2 | 6.29 | 1 | 54.9 | 65 |
| 12 | 23.1 | 10.4 | 15 | 155 | 30 | 2 | 4.95 | 1 | 54.0 | 61 |

*) Farbwerte:
5= Allergene wie unbehandelt.
4= Allergene etwas reduziert.
3= Allergene deutlich reduziert.
2= Allergene überwiegend reduziert.
1= Allergene völlig verschwunden.

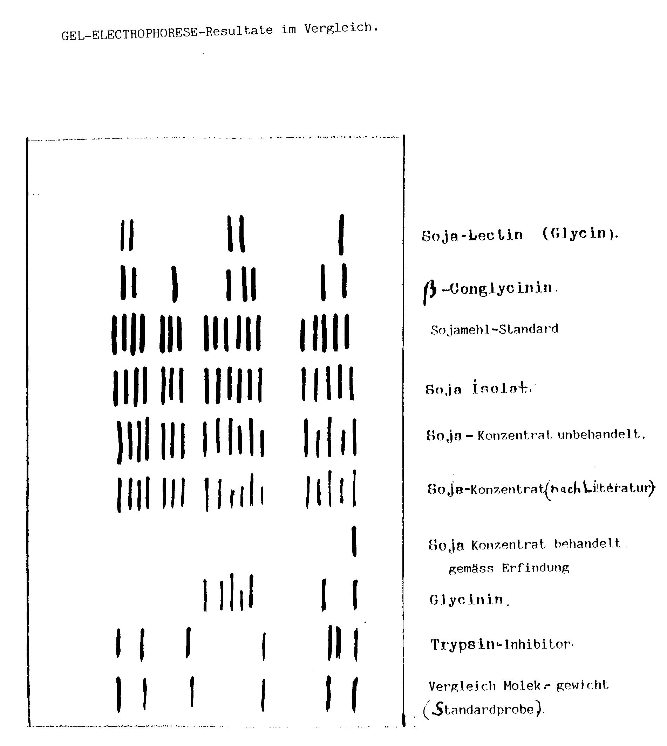

## Patentansprüche

1. Verfahren zur Zubereitung von Sojamehl, welches als Bestandteil von Nahrungsmitteln geeignet ist, durch Extraktion und Rösten von Sojaschrot, **dadurch gekennzeichnet**, dass man zur Beseitigung von allergenen Verbindungen das Sojaschrot nacheinander folgenden Verfahrensstufen unterzieht:

a) Konditionierung während etwa 15 Minuten, durch Zusatz von 2-3 Gew.-% konzentrierter Natron- oder Kalilauge, bis zu einem Feuchtigkeitsgehalt von 20-25 Gew.-% und einem pH-Wert von mehr als 7,

b) Hydrolyse unter Druck von 20-40 bar, bei einer Temperatur von 149-178°C, unter gleichzeitiger schneller Bewegung der Masse während 1-4 Minuten,

c) Expansion des Produktes bis auf Normaldruck,

d) Zusatz von Säure bis zu einem schwach sauren pH-Wert,

e) Vermahlen des erhaltenen Produktes.

2. Verfahren nach Anspruch 1, **dadurch gekennzeichnet**, dass die Verfahrensstufe der Hydrolyse (Stufe b) ausgeführt wird in einem Schneckenförderer mit Expansionsmundstück.

3. Nahrungsmittelrohstoff, erhältlich mittels des Verfahrens nach Anspruch 1 oder 2.

## Claims

1. A process for the preparation of soybean flour, which is suitable as a component of foodstuffs, by extraction and roasting of coarse soya cake, characterized in that coarse soya cake is submitted in succession to the following processing steps, in order to withdraw allergenic compounds:

a) conditioning during about 15 minutes by addition of 2-3% by weight of concentrate sodium- or potassium-hydroxyde, reaching a moisture content of 20-25% by weight and a pH-value of upwards of 7;

b) hydrolysis under pressure of 20-40 bar, at a temperature of 149-178°C, simultaneously in quick motion of the mass during 1-4 minutes;

c) expansion of the product until normal pressure;

d) addition of acid until a weak acidic pH-value is reached;

e) grinding the product obtained.

2. A process according to claim 1, characterized in that the process step of the hydrolysis (step b) is performed in a screw conveyor with an orifice of dilatation.

3. A nutritional base material, obtained by means of the process according to claim 1 or 2.

## Revendications

1. Un procédé de préparation de farine de soja de façon à servir propre comme partie constituante de substances alimentaires, de traitement d'extraction et de torréfication des morceaux de soja, caractérisé en ce que pour l'écartement des composés allergéniques on soumet lesdits morceaux de soja graduellement aux phases du procédé suivant:

a) Un conditionnement pendant 15 minutes environ, en ajoutant de 2-3% en poids de lessive de soude caustique ou de lessive de potasse caustique, jusqu'à une teneur en liquide de 20-25% en poids et une valeur pH de plusque 7;

b) Une hydrolyse sous pression de 20-40 bar, à une température de 149-178°C, simultanément mise en mouvement rapide de la masse durant 1-4 minutes;

c) Une détente du produit jusqu'à la pression normale;

d) Une addition d'acide jusqu'à une valeur du pH d'acidité faible;

e) Le broyage du produit obtenu.

2. Un procédé selon la revendication 1, caractérisé en ce que la phase du procédé de l'hydrolyse (phase b) est executée dans une boudineuse pourvue d'un orifice de dilatation.

3. Produit nutritif,obtenu d'après le procédé selon les revendications 1 ou 2.

GEL-ELECTROPHORESE-Resultate im Vergleich.

Soja-Lectin   (Glycin).

$\beta$ -Conglycinin.

Sojamehl-Standard

Soja Isolat.

Soja – Konzentrat unbehandelt.

Soja-Konzentrat(nach Litteratur)

Soja Konzentrat behandelt
  gemäss Erfindung

Glycinin.

Trypsin-Inhibitor.

Vergleich Molek.- gewicht
(Standardprobe).